# EUROPÄISCHE PATENTSCHRIFT

(11) **EP 1 159 323 B1**
(45) Veröffentlichungstag und Bekanntmachung des Hinweises auf die Patenterteilung: **10.12.2003**
(21) Anmeldenummer: 00909129.9
(22) Anmeldetag: 01.02.2000
(51) Int. Cl.: C08G 18/08, C08G 18/12, C08G 18/32, C08G 18/66, C08G 18/72, C09D 175/06

(54) **POLYURETHAN UND SEINE VERWENDUNG IN DER WÄSSRIGEN KUNSTSTOFFLACKIERUNG**
POLYURETHANE AND ITS USE IN AQUEOUS PAINTING PLASTIC
POLYURETHANE ET SON UTILISATION DANS LA MISE EN PEINTURE PLASTIQUE

(30) Priorität: 03.02.1999 DE 19904170; 05.02.1999 DE 19904624
(43) Veröffentlichungstag der Anmeldung: 05.12.2001
(73) Patentinhaber: BASF Coatings AG, 48165 Münster (DE)
(72) Erfinder: SCHWARTE, Stephan, D-48282 Emsdetten (DE); HARTUNG, Michael, D-59590 Geseke (DE)
(74) Vertreter: Fitzner, Uwe, Dr.
(86) Internationale Anmeldenummer: EP0000779
(87) Internationale Veröffentlichungsnummer: WO00046265

(56) Entgegenhaltungen:
- EP-B- 0 521 928
- US-A- 4 594 385
- US-A- 5 308 914
- US-A- 5 349 041

## Beschreibung

Die vorliegende Erfindung betrifft ein neues Polyurethan und eine neue Polyurethandispersion und deren Verwendung in der wäßrigen Kunststofflackierung. Außerdem betrifft die vorliegende Erfindung einen neuen wäßrigen Beschichtungsstoff, welcher das neue Polyurethan und die neue Polyurethandispersion enthält. Desweiteren betrifft die vorliegende Erfindung ein neues Verfahren zur Herstellung von Mehrschichtlackierungen auf Kunststoffen. Nicht zuletzt betrifft die vorliegende Erfindung neue Lackierungen, inklusive Mehrschichtlackierungen, für Kunststoffe sowie Kunststoffteile, welche diese neuen Lackierungen aufweisen.

Polyurethane, ihre wäßrigen Dispersionen, wäßrige Beschichtungsstoffe auf Basis von Polyurethanen, die Verwendung dieser wäßrigen Beschichtungsstoffe als Wasserbasislacke für die Herstellung von Mehrschichtlackierungen, beispielsweise nach dem Naß-in-naß-Verfahren, sowie die entsprechenden Lackierungen sind aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747 oder EP-A-0 401 565 bekannt.

Diese bekannten wässrigen Beschichtungsstoffe und Verfahren sind in der Automobilserienlackierung hervorragend für die Lackierung von mit Elektrotauchlacken und Füllern oder Grundierungen vorbeschichteten Metallteilen nach dem Naß-in-naß-Verfahren geeignet. Bei diesem Verfahren wird bekanntermaßen der Wasserbasislack nach seiner Applikation nicht ausgehärtet, sondern lediglich zwischengetrocknet. Der in organischen Lösemitteln gelöste Klarlack wird auf die Wasserbasislackschicht aufgetragen, wonach die beiden Schichten gemeinsam eingebrannt werden.

Wäßrige Beschichtungsstoffe für die Kunststofflackierung sind ebenfalls bekannt. Sie machen von den Polyurethandispersionen der bekannten Wasserbasislacken, welche u. a. in den vorstehend genannten Patentschriften beschrieben werden, Gebrauch. Die betreffenden Kunststofflackierungen zeigen jedoch beträchtliche Schwächen in der Feuchtbeständigkeit. Dies wird besonders anhand des Schwitzwassertests und bei der Dampfstrahlprüfung offenbar. Dies macht sich besonders nachteilig bei den modernen Automobilkarosserien bemerkbar, worin lackierte Kunststoffteile und Metallteile aneinander stoßen, da hier der Unterschied in der Haftung besonders kraß zutage tritt.

Aufgabe der vorliegenden Erfindung ist es, ein neues Polyurethan bzw. eine neue Polyurethandispersion bereitzustellen, welche die Nachteile des Standes der Technik nicht mehr länger aufweist, sondern die Herstellung wäßriger Beschichtungsstoffe ermöglicht, welche für die wäßrige Kunststofflackierung verwendet werden können und ein- oder mehrschichtige Kunststofflackierungen mit hervorragenden optischen Eigenschaften und hervorragender Haftfestigkeit auch nach Schwitzwasserbelastung liefern. Darüber hinaus sollen sich die neuen wäßrigen Beschichtungsstoffe auch nach dem Naß-in-naß-Verfahren problemlos applizieren lassen.

Demgemäß wurde das neue Polyurethan eines zahlenmittleren Molekulargewichts Mn von 3.000 bis 50.000 und einer Säurezahl von 10 bis 35 gefunden, welches herstellbar ist, indem man
(a1) mindestens ein Polyesterpolyol eines zahlenmittleren Molekulargewichts Mn von 1.000 bis 4.000, vorzugsweise 1.200 bis 3.000, einer Säurezahl von 0 bis 15, vorzugsweise 0 bis 10, und einer OH-Zahl von 35 bis 150, vorzugsweise 50 bis 120, auf der Basis acyclischer aliphatischer und cycloaliphatischer Dicarbonsäuren,
(a2) ein Gemisch aus mindestens einem Diol und einem Triol,
(a3) mindestens eine Verbindung, welche mindestens zwei mit Isocyanat reaktive funktionelle Gruppen (a31) und mindestens eine zur Anionenbildung befähigte funktionelle Grupppe (a32) aufweist, und
(a4) ein Gemisch aus mindestens einem acyclischen aliphatischen und mindestens einem cycloaliphatischen Diisocyanat
mit den Maßgaben, daß
(i) in dem Gemisch (a2) die Diole und die Triole im molaren Verhältnis von 2 : 1 bis 13 : 1, vorzugsweise 2,5 : 1 bis 8 : 1, vorliegen,
(ii) das molare Verhältnis der Polyesterpolyole (a1) zu dem Gemisch (a2) bei 4,5 : 1 bis 1 : 1, vorzugsweise 3,5 : 1 bis 1,5 : 1 liegt und
(iii) in dem Gemisch (a4) die acyclischen aliphatischen und cycloaliphatischen Diisocyanate im molaren Verhältnis von 1 : 0,16 bis 1 : 6, vorzugsweise 1 : 0,5 bis 1 : 5,5, vorliegen;
zu einem isocyanatgruppenhaltigen Präpolymer umsetzt, wonach man das Präpolymer mit einem multifunktionellen Amin oder Aminoalkohol kettenverlängert und gegebenenfalls neutralisiert.

Im folgenden wird das neue Polyurethan der Klarheit halber als "erfindungsgemäßes Polyurethan" bezeichnet.

Außerdem wurde die neue Polyurethandispersion gefunden, welcher mindestens ein erfindungsgemäßes Polyurethan (A) in einem wäßrigen Medium (B) dispergiert enthält.

Im folgenden wird die neue Polyurethandispersion der Klarheit halber als "erfindungsgemäße Polyurethandispersion" bezeichnet.

Des weiteren wurden die neuen wäßrigen Beschichtungsstoffe gefunden, welche mindestens ein erfindungsgemäßes Polyurethan (A) oder eine erfindungsgemäße Polyurethandispersion (A/B) enthalten.

Im folgenden werden die neuen wäßrigen Beschichtungsstoffe der Klarheit halber als "erfindungsgemäße Beschichtungsstoffe" bezeichnet.

Des weiteren wurde ein neues Verfahren zur Beschichtung von Kunststoffen mit einer Mehrschichtlackierung durch
(I) Applikation einer Zweikomponenten-Hydrogrundierung und deren Aushärtung, wodurch eine Grundierung resultiert,
(II) Applikation eines wäßrigen Beschichtungsstoffs auf der Grundierung,
(III) Naß-in-naß-Applikation eines Zweikomponenten-Klarlacks und
(IV) Aushärten der resultierenden Basislack-/Klarlackschicht
gefunden, bei dem man einen wäßrigen Beschichtungsstoff verwendet, welcher
(A) mindestens ein Polyurethan enthält, das herstellbar ist, indem man
   (a1) ein Polyesterpolyol auf der Basis acyclischer aliphatischer und cycloaliphatischer Dicarbonsäuren,
   (a2) ein Gemisch aus mindestens einem Diol und mindestens einem Triol,
   (a3) mindestens eine Verbindung, welche mindestens zwei mit Isocyanat reaktive funktionelle Gruppen (a31) und mindestens eine zur Anionenbildung befähigte funktionelle Grupppe (a32) aufweist, und
   (a4) ein Gemisch aus mindestens einem acyclischen aliphatischen und mindestens einem cycloaliphatischen Diisocyanat
zu einem isocyanatgruppenhaltigen Präpolymer umsetzt, wonach man das Präpolymer mit einem multifunktionellen Amin oder Aminoalkohol kettenverlängert und gegebenenfalls neutralisiert.

Im folgenden wird das neue Verfahren zur Beschichtung von Kunststoffen mit einer Mehrschichtlackierung der Kürze halber als "erfindungsgemäßes Verfahren" bezeichnet.

Darüber hinaus wurden die neuen Kunststofflackierungen gefunden, welche mittels der erfindungsgemäßen Beschichtungsstoffe und/oder mit Hilfe des erfindungsgemäßen Verfahrens herstellbar sind.

Im folgenden werden die neuen Kunststofflackierungen der Klarheit halber als "erfindungsgemäße Kunststofflackierungen" bezeichnet.

Nicht zuletzt wurden die neuen Kunststoffteile gefunden, welche die erfindungsgemäßen Kunststofflackierungen aufweisen und im folgenden als "erfindungsgemäße Kunststoffteile" bezeichnet werden.

Das erfindungsgemäße Polyurethan weist ein zahlenmittleres Molekulargewicht Mn von 3.000 bis 50.000 und eine Säurezahl von 10 bis 35 auf. Es ist herstellbar, in dem man die nachstehend beschriebenen erfindungsgemäß geeigneten Komponenten in der nachstehend beschriebenen Weise miteinander umsetzt.

Die erste wesentliche Komponente für die Herstellung des erfindungsgemäßen Polyurethans ist mindestens ein Polyesterpolyol (a1) eines zahlenmittleren Molekulargewichts Mn von 1.000 bis 4.000, vorzugsweise 1.200 bis 3.000, einer Säurezahl von 0 bis 15, vorzugsweise 0 bis 10, und einer OH-Zahl von 35 bis 150, vorzugsweise 50 bis 120, auf der Basis acyclischer aliphatischer und cycloaliphatischer Dicarbonsäuren.

Beispiele für geeignete erfindungsgemäß zu verwendende acyclische aliphatische Dicarbonsäuren sind Oxalsäure, Malonsäure, Bernsteinsäure, Glutarsäure, Adipinsäure; Pimelinsäure; Korksäure, Azelainsäure, Sebacinsäure, Undecandicarbonsäure oder Dodecandicarbonsäure, von denen Adipinsäure, Glutarsäure, Azelainsäure und/oder Sebacinsäure vorteilhaft sind und deshalb bevorzugt verwendet werden.

Beispiele für geeignete erfindungsgemäß zu verwendende cycloaliphatische Dicarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecan-Dicarbonsäure. Die cycloaliphtatischen Dicarbonsäuren können sowohl in ihrer cis- als auch in ihrer trans-Form sowie als Gemisch beider Formen eingesetzt werden.

Erfindungsgemäß geeignet sind auch die veresterungsfähigen Derivate der obengenannten Dicarbonsäuren, wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Dicarbonsäuren eingesetzt werden, sofern sie existieren.

Zur Herstellung des Polyesterpolyols (a1) werden die vorstehend genannten Dicarbonsäuren mit Diolen und Triolen, insbesondere Diolen, umgesetzt. Beispiele geeigneter Diole und Triole sind die nachstehend beschriebenen.

Die Herstellung des Polyesterpolyols (a1) erfolgt nach den bekannten Methoden der Veresterung, wie dies beispielsweise in der DE-A-40 24 204, Seite 4, Zeilen 50 bis 65, beschrieben ist. Die Umsetzung erfolgt dabei üblicherweise bei Temperaturen zwischen 180 und 280°C, gegebenenfalls in Gegenwart eines geeigneten Veresterungskatalysators, wie z.B. Lithiumoctoat, Dibutylzinnoxid, Dibutylzinndilaurat oder para-Toluolsulfonsäure.

Üblicherweise wird die Herstellung des Polyesterpolyols (a1) in Gegenwart geringer Mengen eines geeigneten Lösemittels als Schleppmittel durchgeführt. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Die zweite wesentliche Komponente zur Herstellung des erfindungsgemäßen Polyurethans ist ein Gemisch (a2) aus mindestens einem Diol und mindestens einem Triol.

Geeignete Diole (a2) sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol oder die stellungsisomeren Diethyloctandiole.

Weitere Beispiele geeigneter Diole (a2) sind Diole der Formel (a21) oder (a 22) 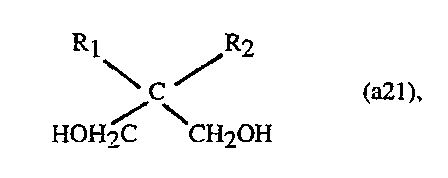 in der R₁ und R₂ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R₁ und/oder R₂ nicht Methyl sein darf; 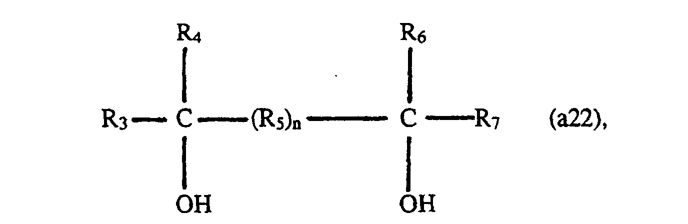 in der R₃, R₄, R₆ und R₇ jeweils gleiche oder verschiedene Reste darstellen und für einen Alkylrest mit 1 bis 6 C-Atomen, einen Cycloalkylrest oder einen Arylrest stehen und R₅ einen Alkylrest mit 1 bis 6 C-Atomen, einen Arylrest oder einen ungesättigten Alkylrest mit 1 bis 6 C-Atomen darstellt, und n entweder 0 oder 1 ist.

Als Diole (a21) sind alle Propandiole der Formel (a21) geeignet, bei denen entweder R₁ oder R₂ oder R₁ und R₂ nicht gleich Methyl ist, wie beispielsweise 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3 oder 2-Cyclo-hexyl-2-methylpropandiol-1,3 und andere.

Als Diole (a22) (Formel (a22)) können beispielsweise 2,5-Dimethyl-hexandiol-2,5, 2,5-Diethylhexandiol-2,5, 2-Ethyl-5-methylhexandiol-2,5, 2,4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Beispiele geeigneter Triole (a2) sind Trimethylolethan, Trimethylolpropan oder Glycerin, insbesondere Trimethylolpropan.

Die dritte wesentliche Komponente zur Herstellung des erfindungsgemäßen Polyurethans ist mindestens eine Verbindung, welche mindestens zwei mit Isocyanat reaktive funktionelle Gruppen (a31) und mindestens eine zur Anionenbildung befähigte funktionelle Grupppe (a32) aufweist.

Geeignete gegenüber Isocyanatgruppen reaktive funktionelle Gruppen (a31) sind insbesondere Hydroxylgruppen sowie primäre und/oder sekundäre Aminogruppen, von denen Hydroxylgruppen vorteilhaft sind und deshalb bevorzugt verwendet werden. Funktionelle Gruppen (a32), die zur Anionenbildung befähigt sind, sind Carboxyl-, Sulfonsäure- und/oder Phosphonsäuregruppen, von denen die Carboxylgruppen vorteilhaft sind und deshalb bevorzugt verwendet werden.

Vorzugsweise werden Alkansäuren mit zwei Substituenten am alpha-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Beispiele geeigneter Verbindungen (a3) sind Dimethylolpropionsäure, Dimethylolpropansulfonsäure oder Dimethylolpropanphosphonsäure, insbesondere Dimethylolpropionsäure. Im allgemeinen werden Verbindungen (a3) in einer Menge verwendet, welche die Polyurethane, im allgemeinen nicht mit Wasser verträglich sind, nach der Neutralisation mit den nachstehend beschriebenen Aminen oder Aminoalkoholen wasserdispergierbar machen. Vorteilhafterweise werden die Verbindungen (a3) in einer Menge verwendet, daß im unneutralisierten Präpolymer eine Säurezahl von 10 bis 35 mg KOH/g resultiert.

Die vierte wesentliche Komponente für die Herstellung des erfindungsgemäßen Polyurethans ist ein Gemisch (a4) aus mindestens einem acyclischen aliphatischen und mindestens einem cycloaliphatischen Diisocyanat. Im Rahmen der vorliegenden Erfindung bezeichnet der Begriff "cycloaliphatisches Diisocyanat" ein Diisocyanat, worin mindestens eine Isocyanatgruppe an einen cycloaliphatischen Rest gebunden ist.

Beispiele geeigneter erfindungsgemäß zu verwendender cycloaliphatischer Diisocyanate (a4) sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethylcyclohexan, 5-Isocyanato-1-(3-isocyanataprop-1-yl)-1,3,3-trimethyl-cyclahexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan Dicyclohexylmethan-2,4'-diisocyanat oder Dicyclohexylmethan-4,4'-diisocyanat, insbesondere Isophorondiisocyanat.

Beispiele geeigneter erfindungsgemäß zu verwendender acyclischer aliphatischer Diisocyanate sind Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften DO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan. Letztere sind im Rahmen der vorliegenden Erfindung aufgrund ihrer beiden aussschließlich an Alkylgruppen gebundenen Isocyanatgruppen trotz ihrer cyclischen Gruppen zu den acyclischen aliphatischen Diisocyanaten zu zählen. Von diesen ist Hexamethylendiisocyanat erfindungsgemäß vorteilhaft und wird deshalb besonders bevorzugt verwendet.

Erfindungsgemäß werden die vorstehend beschriebenen wesentlichen Komponenten (a1), (a2), (a3) und (a4) mit den Maßgaben miteinander umgesetzt, daß
(i) in dem Gemisch (a2) die Diole und die Triole im molaren Verhältnis von 2 : 1 bis 13 : 1, vorzugsweise 2,5 : 1 bis 8 : 1, vorliegen,
(ii) das molare Verhältnis der Polyesterpolyole (a1) zu dem Gemisch (a2) bei 4,5 : 1 bis 1 : 1, vorzugsweise 3,5 : 1 bis 1,5 : 1 liegt und
(iii) in dem Gemisch (a4) die acyclischen aliphatischen und cycloaliphatischen Diisocyanate im molaren Verhältnis von 1 : 0,16 bis 1 : 6, insbesondere 1 : 0,5 bis 1 : 5,5 , vorliegen.

Hierbei werden die vorstehend beschriebenen wesentlichen Komponenten (a1), (a2), (a3) und (a4) in einem Verhältnis miteinander umgesetzt, daß erfindungsgemäß ein isocyanatgruppenhaltiges Präpolymer entsteht.

Die Umsetzung der Komponenten (a1), (a2), (a3) und (a4) erfolgt dabei nach den gut bekannten Verfahren der organischen Chemie (vgl. z.B. Kunststoff-Handbuch, Band 7: Polyurethane, herausgegeben von Dr. Y. Oertel, Carl Hanser Verlag, München, Wien 1983). Beispiele für die Herstellung der Präpolymeren sind in der DE-A-26 24 442 und der DE-A-32 10 051 beschrieben.

Die Umsetzung der Komponenten erfolgt gegebenenfalls in Ethoxyethylpropionat (EEP) als Lösemittel. Die Menge an EEP kann dabei in weiten Grenzen variieren und sollte zur Bildung einer Präpolymerlösung mit geeigneter Viskosität ausreichen. Im allgemeinen werden bis zu 70 Gew.-%, bevorzugt 5 bis 50 Gew.-% und besonders bevorzugt weniger als 20 Gew.-% Lösemittel, bezogen auf den Festkörper, eingesetzt. So kann die Umsetzung beispielsweise ganz besonders bevorzugt bei einem Lösemittelgehalt von 10 - 15 Gew.-% EEP, bezogen auf den Festkörper, durchgeführt werden.

Die Umsetzung der Komponenten (a1), (a2), (a3) und (a4) kann gegebenenfalls in Gegenwart eines Katalysators, wie Organozinnverbindungen und/oder tertiären Aminen, erfolgen.

Zur Herstellung der Präpolymeren werden die Mengen der Komponenten so gewählt, daß das Äquivalentverhältnis von NCO- zu OH-Gruppen zwischen 2,0 : 1,0 und > 1,0 : 1,0, bevorzugt zwischen 1,4 : 1 und 1,1 : 1, liegt.

Das NCO-Präpolymer enthält wenigstens etwa 0,5 Gew.-% Isocyanatgruppen, vorzugsweise wenigstens 1 Gew.-% NCO, bezogen auf den Feststoff. Die obere Grenze liegt bei etwa 15 Gew.-%, vorzugsweise 10 Gew.-%, besonders bevorzugt bei 5 Gew.-% NCO.

Die Isocyanatgruppen des isocyanatgruppenhaltigen Präpolymers werden mit einem Modifizierungsmittel oder Kettenverlängerungsmittel umgesetzt. Das Modifizierungsmittel wird dabei vorzugsweise in einer solchen Menge zugegeben, daß es zu Kettenverlängerungen und damit zu Molekulargewichtserhöhungen kommt. Als Modifizierungsmittel werden erfindungsgemäß organische Verbindungen, die sekundäre und/oder primäre Aminogruppen sowie gegebenenfalls Hydroxylgruppen enthalten, insbesondere di-, tri- und/oder höherfunktionelle Polyamine und/oder Aminoalkohole, eingesetzt. Beispiele geeigneter Polyamine sind Ethylendiamin, Trimethylendiamin, Tetramethylendiamin, Pentamethylendiamin, Hexamethylendiamin oder Diethylentriamin. Beispiele geeigneter Aminoalkohole sind Ethanolamin, Propanolamin, Diethanolamin oder Dipropanolamin. Die Polyamine und/oder Aminoalkohole können auch der Neutralisation der in das Prepolymer eingebauten Carbon-, Sulfon- und/oder Phosphonsäuregruppen dienen.

Das resultierende erfindungsgemäße Polyurethan wird gegebenenfalls noch neutralisiert, sofern dies noch nicht mit Hilfe der vorstehend beschriebenen Amine und/oder Aminoalkohole erfolgt ist. Beispiele geeigneter Neutralisationsmittel sind Ammoniak, Ammoniumsalze, wie beispielsweise Ammoniumcarbonat oder Ammoniumhydrogencarbonat, sowie tertiäre Amine, wie Trimethylamin, Triethylamin, Tributylamin, Dimethylanilin, Diethylanilin oder Triphenylamin und/oder Aminoalkohole wie Dimethylethanolamin, Diethylethanolamin, Methyldiethanolamin oder Triethanolamin. Die Neutralisation kann in organischer Phase oder in wäßriger Phase erfolgen. Bevorzugt wird als Neutralisationsmittel Dimethylethanolamin eingesetzt.

In erfindungsgemäße Verfahrensweise wird das erfindungsgemäße Polyurethan in einem wäßrigen Medium (B) dispergiert.

Das wäßrige Medium (B) enthält im wesentlichen Wasser. Hierbei kann das wäßrige Medium in untergeordneten Mengen organischer Lösemittel wie Ethoxyethylpropionat, Butylglykol und/oder Methylethylketon, die vorstehend beschriebenen Neutralisationsmittel, die nachstehend beschriebenen Vernetzungsmittel und/oder Lackadditive (D) und/oder sonstige gelöste feste, flüssige oder gasförmige organische und/oder anorganische, nieder- und/oder hochmolekulare Stoffe enthalten. Im Rahmen der vorliegenden Erfindung ist unter dem Begriff "untergeordnete Menge" eine Menge zu verstehen, welche den wäßrigen Charakter des wäßrigen Mediums nicht aufhebt.

Bei dem wäßrigen Medium (B) kann es sich aber auch um reines Wasser handeln.

Die erfindungsgemäße Polyurethandispersion (A/B) kann zahlreichen Verwendungszwecken zugeführt werden. Insbesondere eignet sie sich zur Verwendung in der Kunststofflackierung, insbesondere in Form des erfindungsgemäßen Beschichtungsstoffs.

Vorteilhafterweise handelt es sich bei den erfindungsgemäßen Beschichtungsstoff um einen
Basislack.

Der erfindungsgemäße Beschichtungsstoff enthält farb- und/oder effektgebende Pigmente (C) in üblichen und bekannten Mengen. Die Pigmente können aus anorganischen oder organischen Verbindungen bestehen und können effektund/oder farbgebend sein. Der erfindungsgemäße Beschichtungsstoff gewährleistet daher aufgrund dieser Vielzahl geeigneter Pigmente eine universelle Einsatzbreite der Beschichtungsstoffe und ermöglicht die Realisierung einer Vielzahl von Farbtönen und optischer Effekte.

Als Effektpigmente (C) können Metallplättchenpigmente wie handelsübliche Aluminiumbronzen, gemäß DE-A-36 36 183 chromatierte Aluminiumbronzen, und handelsübliche Edelstahlbronzen sowie nicht metallische Effektpigmente, wie zum Beispiel Perlglanz- bzw. Interferenzpigmente, eingesetzt werden. Beispiele für geeignete anorganische farbgebende Pigmente (C) sind Titandioxid, Eisenoxide, Sicotransgelb und Ruß. Beispiele für geeignete organische farbgebende Pigmente sind Indanthrenblau, Cromophthalrot, Irgazinorange und Heliogengrün.

Desweiteren kann der erfindungsgemäße Beschichtungsstoff organische und anorganische Füllstoffe (C) in üblichen und bekannten, wirksamen Mengen enthalten. Beispiele für geeignete Füllstoffe sind Kreide, Calciumsulfate, Bariumsulfat, Silikate wie Talk oder Kaolin, Kieselsäuren, Oxide wie Aluminiumhydroxid oder Magnesiumhydroxid, Nanopartikel oder organische Füllstoffe wie Textilfasern, Cellulosefasern, Polyethylenfasern oder Holzmehl.

Der erfindungsgemäße Beschichtungsstoff enthält des weiteren Lackadditive (D) in üblichen und bekannten, wirksamen Mengen.

Beispiele geeigneter Lackadditive (D) sind UV-Absorber; Radikalfänger; Katalysatoren für die Vernetzung, insbesondere metallorganische Verbindungen, vorzugsweise Zinn und/oder wismutorganische Verbindungen oder tertiäre Amine; Slipadditive; Polymerisationsinhibitoren; Entschäumer; Haftvermittler; Verlaufmittel oder filmbildende Hilfsmittel, z.B. Cellulose-Derivate.

Insbesondere kann als Lackadditiv (D) mindestens ein rheologiesteuerndes Additiv verwendet werden. Beispiele geeigneter rheologiesteuernder Additive (D) sind die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate. Bevorzugt werden als rheologiesteuernde Additive (D) Polyurethane und/oder Schichtsilikate eingesetzt.

Sofern der erfindungsgemäße Beschichtungsstoff als Zweikomponentensystem angewandt wird, wird ihm vor der Applikation ein übliches und bekanntes Polyisocyanat als Vernetzungsmittel zugesetzt.

Beispiele geeigneter Vernetzungsmittel dieser Art sind insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5000 und - sofern das manuelle Vermischen der Bestandteile des Beschichtungsstoffs vorgesehen ist - insbesondere 500 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Amylmethylketon oder Butylacetat. Außerdem können die Polyisocyanate in üblicher und bekannter Weise hydrophil oder hydrophob modifiziert sein.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben. Beispielsweise geeignet sind die bei der Beschreibung des erfindungsgemäßen Polyurethans genannten Isocyanate und/oder isocyanatgruppenhaltige Präpolymere, die durch Reaktion von Polyolen mit einem Überschuß an Polyisocyanaten hergestellt werden können und die bevorzugt niederviskos sind.

Weitere Beispiele geeigneter Polyisocyanate sind Isocyanurat-, Biuret-, Allophanat-, Iminooxadiazindon-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat, 1,3-Bis(isocyanatomethyl)cyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan oder 1-Isocyanato-2-(3-isocyanatopropyl)cyclohexan oder Mischungen aus diesen Polyisocyanaten eingesetzt.

Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Der Polyisocyanatbestandteil kann im übrigen auch aus beliebigen Gemischen der beispielhaft genannten freien Polyisocyanate bestehen.

Der erfindungsgemäße Beschichtungsstoff wird, sofern dies notwendig ist, mit deionisiertem Wasser auf die für die Applikation notwendige Viskosität eingestellt. Für seine Applikation können die üblichen und bekannten Applikationsmethoden, wie z.B. Spritzen, Rakeln, Streichen, Gießen, Tauchen oder Walzen auf beliebige Substrate, wie z.B. Metall, Holz, Kunststoff, Glas oder Papier, insbesondere aber Kunststoff, angewandt werden.

Der erfindungsgemäße Beschichtungsstoff ist insbesondere hervorragend für das erfindungsgemäße Verfahren geeignet.

Das erfindungsgemäße Verfahren dient der Beschichtung von Kunststoffen mit einer Mehrschichtlackierung.

Es geht im Verfahrensschritt (I) aus von der Applikation einer Zweikomponenten-Hydrogrundierung und deren Aushärtung, wodurch eine Grundierung resultiert. Als Hydrogrundierungen kommen hierbei die üblichen und bekannten am Markt erhältlichen Grundierungen für Kunststoffe in Betracht.

Im Verfahrensschritt (II) erfolgt die Applikation eines wäßrigen Beschichtungsstoffs auf der Grundierung. Erfindungsgemäß wird hierbei ein wäßriger Beschichtungsstoff verwendet, welcher
(A) mindestens ein Polyurethan enthält, das herstellbar ist, indem man
   (a1) ein Polyesterpolyol auf der Basis acyclischer aliphatischer und cycloaliphatischer Dicarbonsäuren,
   (a2) ein Gemisch aus mindestens einem Diol und mindestens einem Triol,
   (a3) mindestens eine Verbindung, welche mindestens zwei mit Isocyanat reaktive funktionelle Gruppen (a31) und mindestens eine zur Anionenbildung befähigte funktionelle Grupppe (a32) aufweist, und
   (a4) ein Gemisch aus mindestens einem acyclischen aliphatischen und mindestens einem cycloaliphatischen Diisocyanat
zu einem isocyanatgruppenhaltigen Präpolymer umsetzt, wonach man das Präpolymer mit einem multifunktionellen Amin und/oder Aminoalkohol kettenverlängert und gegebenenfalls neutralisiert.

Für das erfindungsgemäße Verfahren ist es von Vorteil, wenn das Polyurethan (A) in einem wäßrigen Medium (B) dispergiert vorliegt.

Beispiele für Polyurethane (A) und Polyurethandispersionen (A/B), welche für das erfindungsgemäße Verfahren hervorragend geeignet sind, sind die vorstehend im Detail beschriebenen erfindungsgemäßen Polyurethane und Polyurethandispersionen.

In erfindungsgemäßer Verfahrensweise wird der applizierte Beschichtungsstoff lediglich zwischengetrocknet, indes nicht vollständig ausgehärtet.

Im Verfahrensschritt (III) erfolgt die Naß-in-naß-Applikation eines Zweikomponenten-Klariacks auf die im Verfahrensschritt (II) aufgebrachte Basislackschicht. Hierbei können die von der Autoreparaturlackierung her bekannten Klarlacke angewandt werden, welche Bindemittel mit isocyanatreativen Gruppen und die vorstehend beschriebenen Polyisocyanate als Vernetzungsmittel in organischen Lösemitteln gelöst oder dispergiert enthalten.

Erfindungsgemäß erfolgt im Verfahrensschritt (IV) das Aushärten der resultierenden Basislack-/Klarlackschicht, wodurch die erfindungsgemäßen mehrschichtige Kunststofflackierungen resultiert.

Die nach dem erfindungsgemäßen Verfahren und/oder mit Hilfe des erfindungsgemäßen Beschichtungsstoffs hergestellte Kunststofflackierung ist hervorragend für die Beschichtung aller üblichen und bekannten grundierten oder nicht grundierten Kunststoffen geeignet.

Beispiele solcher Kunststoffe sind ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM oder UP (Kurzbezeichnungen nach DIN 7728T1). Die zu lackierenden Kunststoffe können selbstverständlich auch Polymerblends, modifizierte Kunststoffe oder faserverstärkte Kunststoffe sein. Es können auch für die Beschichtung von üblicherweise im Fahrzeugbau, insbesondere Kraftfahrzeugbau, eingesetzten Kunststoffe zum Einsatz kommen.

Im Falle von nichtfunktionalisierten und/oder unpolaren Substratoberflächen werden diese vorteilhafterweise vor der Beschichtung in üblicher und bekannter Weise einer Vorbehandlung, etwa durch ein Plasma oder durch Beflammen, unterzogen.

Die erfindungsgemäßen Kunststofflackierungen weisen eine hervorragende Haftung zwischen den Schichten und auf der Kunststoffoberfläche auch in einem ausgesprochen feuchten und heißen Klima auf. Der optische Eindruck ist hervorragend.

## Patentansprüche

1. Polyurethan eines zahlenmittleren Molekulargewichts Mn von 3.000 bis 50.000 und einer Säurezahl von 10 bis 35, herstellbar, indem man
(a1) mindestens ein Polyesterpolyol eines zahlenmittleren Molekulargewichts Mn von 1.000 bis 4.000, einer Säurezahl von 0 bis 15, und einer OH-Zahl von 35 bis 150, auf der Basis acyclischer aliphatischer und cycloaliphatischer Dicarbonsäuren,
(a2) ein Gemisch aus mindestens einem Diol und einem Triol,
(a3) mindestens eine Verbindung, welche mindestens zwei mit Isocyanat reaktive funktionelle Gruppen (a31) und mindestens eine zur Anionenbildung befähigte funktionelle Grupppe (a32) aufweist, und
(a4) ein Gemisch aus mindestens einem acyclischen aliphatischen und mindestens einem cycloaliphatischen Diisocyanat
mit den Maßgaben, daß
(i) in dem Gemisch (a2) die Diole und die Triole im molaren Verhältnis von 2 : 1 bis 13 : 1 vorliegen,
(ii) das molare Verhältnis der Polyesterpolyole (a1) zu dem Gemisch (a2) bei 4,5 : 1 bis 1 : 1 liegt und
(iii) in dem Gemisch (a4) die acyclischen aliphatischen und cycloaliphatischen Diisocyanate im molaren Verhältnis von 1 : 0,16 bis 1 : 6 vorliegen;
zu einem isocyanatgruppenhaltigen Präpolymer umsetzt, wonach man das Präpolymer mit einem multifunktionellen Amin oder Aminoalkohol kettenverlängert und gegebenenfalls neutralisiert.

2. Polyurethandispersion, welche
(A) mindestens ein Polyurethan gemäß Anspruch 1
(B) in einem wäßrigen Medium dispergiert enthält.

3. Verwendung des Polyurethans gemäß Anspruch 1 oder der Polyurethandispersion gemäß Anspruch 2 in der Kunststofflackierung.

4. Verwendung des Polyurethans gemäß Anspruch 1 oder der Polyurethandispersion gemäß Anspruch 2 in einem wäßrigen Beschichtungsstoff.

5. Verwendung des Polyurethans gemäß Anspruch 1 oder der Polyurethandispersion gemäß Anspruch 2 in einem wäßrigen Beschichtungsstoff, **dadurch gekennzeichnet, daß** er zusätzlich farb- und/oder effektgebende Pigmente (C) enthält.

6. Verwendung des Polyurethans gemäß Anspruch 1 oder der Polyurethandispersion gemäß Anspruch 2 in einem wäßrigen Beschichtungsstoff, **dadurch gekennzeichnet, daß** er zusätzlich Lackadditive (D) enthält.

7. Verwendung des Polyurethans gemäß Anspruch 1 oder der Polyurethandispersion gemäß Anspruch 2 in einem wäßrigen Beschichtungsstoff für die Kunststofflackierung.

8. Verwendung des Polyurethans gemäß Anspruch 1 oder der Polyurethandispersion gemäß Anspruch 2 in der Kunststofflackierung, **dadurch gekennzeichnet, daß** die Kunststofflackierung durch die Schritte
(I) Applikation einer Zweikomponenten-Hydrogrundierung und deren Aushärtung, wodurch eine Grundierung resultiert,
(II) Applikation eines wäßrigen Beschichtungsstoffs auf der Grundierung,
(III) Naß-in-naß-Applikation eines Zweikomponenten-Klarlacks und
(IV) Aushärten der resultierenden Basislack-/Klarlackschicht
erhalten wird.

## Claims

1. A polyurethane which has a number average molecular weight Mn of from 3,000 to 50,000 and an acid number of from 10 to 35 and is preparable by reacting
(a1) at least one polyesterpolyol having a number average molecular weight Mn of from 1,000 to 4,000, an acid number of from 0 to 15, and an OH number of from 35 to 150, based on acyclic aliphatic and cycloaliphatic dicarboxylic acids,
(a2) a mixture of at least one diol and one triol,
(a3) at least one compound containing at least two isocyanate-reactive functional groups (a31) and at least one functional group (a32) capable of forming anions, and
(a4) a mixture of at least one acyclic aliphatic and at least one cycloaliphatic diisocyanate,
with the proviso that
(i) in the mixture (a2) the diols and triols are in a molar ratio of from 2 : 1 to 13 : 1,
(ii) the molar ratio of the polyesterpolyols (a1) to the mixture (a2) is from 4.5 : 1 to 1 : 1, and
(iii) in the mixture (a4) the acyclic aliphatic and cycloaliphatic diisocyanates are in a molar ratio of from 1 : 0.16 to 1 : 6;
to give an isocyanato-containing prepolymer which is then chain extended with a polyfunctional amine or amino alcohol and, if desired, is neutralized.

2. A polyurethane dispersion comprising
(A) at least one polyurethane as claimed in claim 1
(B) in dispersion in an aqueous medium.

3. The use of the polyurethane as claimed in claim 1 or the polyurethane dispersion as claimed in claim 2 in plastics finishing.

4. The use of the polyurethane as claimed in claim 1 or the polyurethane dispersion as claimed in claim 2 in an aqueous coating material.

5. The use of the polyurethane as claimed in claim 1 or the polyurethane dispersion as claimed in claim 2 in an aqueous coating material, said material further comprising color and/or effect pigments (C).

6. The use of the polyurethane as claimed in claim 1 or the polyurethane dispersion as claimed in claim 2 in an aqueous coating material, said material further comprising coatings additives (D).

7. The use of the polyurethane as claimed in claim 1 or the polyurethane dispersion as claimed in claim 2 in an aqueous coating material for plastics finishing.

8. The use of the polyurethane as claimed in claim 1 or the polyurethane dispersion as claimed in claim 2 in plastics finishing, wherein the plastics finish is obtained by the steps of
(I) applying a two component waterbased primer and curing it to give a primer coat,
(II) applying an aqueous coating material to the primer coat,
(III)applying a two component clearcoat material wet on wet, and
(IV) curing the resultant basecoat/clearcoat film.

## Revendications

1. Polyuréthane d'un poids moléculaire moyen en nombre Mn de 3 000 à 50 000 et d'un indice d'acide de 10 à 35, pouvant être préparé en faisant réagir
(a1) au moins un polyesterpolyol d'un poids moléculaire moyen en nombre Mn de 1 000 à 4 000, d'un indice d'acide de 0 à 15, et d'un indice OH de 35 à 150, à base d'acides dicarboxyliques acycliques aliphatiques et cycloaliphatiques,
(a2) un mélange d'au moins un diol et un triol,
(a3) au moins un composé renfermant au moins deux groupes fonctionnels (a31) réactifs vis-à-vis d'un isocyanate et au moins un groupe fonctionnel (a32) capable de former des anions, et
(a4) un mélange d'au moins un diisocyanate acyclique aliphatique et d'au moins un diisocyanate cycloaliphatique,
à condition que
(i) dans le mélange (a2), les diols et les triols soient présents en un rapport molaire de 2:1 à 13:1,
(ii) le rapport molaire entre le polyesterpolyol (a1) et le mélange (a2) soit de 4,5:1 à 1:1, et
(iii) dans le mélange (a4), les diisocyanates acycliques aliphatiques et cycloaliphatiques soient présents en un rapport molaire de 1:0,16 à 1:6 ;
pour donner lieu à un prépolymère renfermant des groupes isocyanate, après quoi le prépolymère est soumis à un allongement de chaîne avec une amine ou un amino-alcool multifonctionnel et éventuellement neutralisé.

2. Dispersion de polyuréthane
(A) comprenant au moins un polyuréthane selon la revendication 1,
(B) dispersé dans un milieu aqueux.

3. Utilisation du polyuréthane selon la revendication 1 ou de la dispersion de polyuréthane selon la revendication 2 pour le revêtement par matières plastiques.

4. Utilisation du polyuréthane selon la revendication 1 ou de la dispersion de polyuréthane selon la revendication 2 dans un matériau de revêtement aqueux.

5. Utilisation du polyuréthane selon la revendication 1 ou de la dispersion de polyuréthane selon la revendication 2 dans un matériau de revêtement aqueux, **caractérisée en ce qu'**il comprend en outre des pigments colorants et/ou à effet (C).

6. Utilisation du polyuréthane selon la revendication 1 ou de la dispersion de polyuréthane selon la revendication 2 dans un matériau de revêtement aqueux, **caractérisée en ce qu'**il comprend en outre des additifs de revêtement (D).

7. Utilisation du polyuréthane selon la revendication 1 ou de la dispersion de polyuréthane selon la revendication 2 dans un matériau de revêtement aqueux pour le revêtement par matières plastiques.

8. Utilisation du polyuréthane selon la revendication 1 ou de la dispersion de polyuréthane selon la revendication 2 pour le revêtement par matières plastiques, **caractérisée en ce que** le revêtement par matières plastiques est obtenu par les étapes
(I) application d'une couche d'apprêt aqueuse bicomposant et son durcissement, en donnant lieu à une couche d'apprêt,
(II) application d'un matériau de revêtement aqueux sur la couche d'apprêt,
(III) application en mouillé sur mouillé d'une couche transparente bicomposant, et
(IV) durcissement de la couche de fond/couche transparente résultante.
